# EUROPÄISCHE PATENTSCHRIFT

(11) **EP 0 631 227 B1**
(45) Veröffentlichungstag und Bekanntmachung des Hinweises auf die Patenterteilung: **07.04.1999**
(21) Anmeldenummer: 94108720.7
(22) Anmeldetag: 07.06.1994
(51) Int. Cl.: G06F 15/80, G06F 7/00

(54) **Verfahren zur schnellen Inferenzbildung in einem Fuzzy-Logic-Prozessor**
Method for fast inference processing in a fuzzy logic processor
Méthode pour le traitement rapide d'inférence dans un processeur à logique floue

(30) Priorität: 18.06.1993 DE 4320289
(43) Veröffentlichungstag der Anmeldung: 28.12.1994
(73) Patentinhaber: SIEMENS AKTIENGESELLSCHAFT, 80333 München (DE)
(72) Erfinder: Kuenemund, Thomas, Dr., D-80337 München (DE); Hentschel, Klaus, Dipl.-Ing. (FH), D-84028 Landshut (DE)

(56) Entgegenhaltungen:
- FUZZY SETS AND SYSTEMS, Bd.43, Nr.1, 5. September 1991, AMSTERDAM NL Seiten 45 - 55, XP000288591 RENHONG ZHAO ET AL. 'Defuzzification of fuzzy intervals'
- COMPUTER, Bd.25, Nr.5, Mai 1992, LONG BEACH US Seiten 67 - 71, XP000304342 TZI-CKER CHIUEH 'Optimization of Fuzzy Logic Inference Architecture'
- PATENT ABSTRACTS OF JAPAN vol. 16, no. 337 (P-1390) 22. Juli 1992 & JP-A-04 100 153 (YASKAWA ELECTRIC CORP.) 2. April 1992

## Beschreibung

In der deutschen Patentanmeldung mit dem amtlichen Aktenzeichen DE-A-4225758 ist unter anderem ein Fuzzy-Logic-Prozessor beschrieben, der eine Inferenzeinheit aufweist, die aus Ausgangszugehörigkeitsfunktionswerten und Gewichtungsfaktoren eine unscharfe Vereinigungsmenge für eine Defuzzifikationsschaltung bildet.

Eine solche unscharfe Vereinigungsmenge stellt die Verteilung möglicher scharfer Ausgabewerte (possibility distribution) dar, aus der in der Defuzzifikationsschaltung der scharfe Ausgabewert, beispielsweise mit dem Schwerpunktsverfahren (COG-Verfahren) berechnet wird. Insgesamt sind für die Inferenzbildung bisher smax = 2^{a}_{A} Rasterschritte nötig, um die mit beispielsweise a_{A} = 8 Bit aufgelösten möglichen physikalischen Werte des Ausgangs abzurastern. Der für jeden Rasterpunkt s berechnete Wert der unscharfen Vereinigungsmenge FA(s) wird dann an die Defuzzifikationsschaltung weitergeleitet. Zur Berechnung der Werte der unscharfen Vereinigungsmenge FA(s) dienen die Zugehörigkeitsfunktionen der linguistischen Werte der Ausgangsvariablen. Zwar decken diese den gesamten physikalischen Wertebereich der Ausgangsvariablen ab, aber durch die Gewichtung einer Zugehörigkeitsfunktion mit einem Gewichtungsfaktor G = 0 kommt es vor, daß die Zugehörigkeitsfunktion eines linguistischen Wertes der Ausgangsvariablen aufgrund einer Minimum-Verknüpfung durch den Gewichtungsfaktor G ausgeblendet wird. Dies tritt immer dann auf, wenn keine einzige der aufgestellten Regeln, die sich auf den entsprechenden linguistischen Wert der Ausgangsvariable beziehen, "feuert". Die Bezeichnung "feuert" wird hierbei so verstanden, daß der Bedingungsteil der jeweiligen Regel nicht jeweiligen Regel erfüllt ist. Auf diese Weise können zwischen den gewichteten Zugehörigkeitsfunktionen der linguistischen Werte der Ausgangsvariablen Lücken entstehen.

Die Aufgabe der Erfindung ist es nun, Verfahren anzugeben, bei denen unter Ausnutzung der Lücken in der unscharfen Vereinigungsmenge eine schnellere Inferenzbildung in einem Fuzzy-Inference-Prozessor ermöglicht wird als bei bisherigen Verfahren, ohne daß dabei nennenswert mehr Chipfläche benötigt wird und ohne den Informationsgehalt einer echten Laufzeitintegration in irgendeiner Weise zu beeinträchtigen.

Die Aufgabe wird erfindungsgemäß durch die Merkmale der beiden unabhängigen Patentansprüche 1 oder 3 gelöst.

Der Patentanspruch 2 betrifft eine vorteilhafte Weiterbildung eines ersten Schrittes des Verfahrens nach Anspruch 1 und der Patentanspruch 4 betrifft eine vorteilhafte Weiterbildung eines ersten Schrittes des Verfahrens nach Anspruch 3. Der Patentanspruch 5 betrifft eine besondere Ausgestaltung des Verfahrens nach Anspruch 3 oder 4.

Ein besonderer Vorteil im erfindungsgemäßen Verfahren liegt darin, daß gerade in Extremsituationen, das heißt bei großen Abweichungen der Regelgrößen von ihren Sollwerten, eine besonders schnelle Inferenzbildung und damit eine besonders kurze Gesamtverarbeitungszeit in solchen Fällen möglich ist, da hier meist nur eine einzelne oder wenige linguistische Werte der Ausgangsvariablen in Frage kommen und damit vergleichsweise große Lücken auftreten.

Die Erfindung wird nun anhand der Zeichnung näher erläutert. Dabei zeigt:
- Figur 1: ein Diagramm einer unscharfen Menge zur Erläuterung eines ersten und zweiten erfindungsgemäßen Verfahrens,
- Figur 2: ein Blockschaltbild zur Erläuterung eines Schrittes des ersten und zweiten Verfahrens,
- Figur 3 und 4: jeweils ein Diagramm mit einer unscharfen Vereinigungsmenge zur Erläuterung des zweiten erfindungsgemäßen Verfahrens und
- Figur 5: ein Blockschaltbild zur Erläuterung eines weiteren Schrittes des zweiten erfindungsgemäßen Verfahrens.

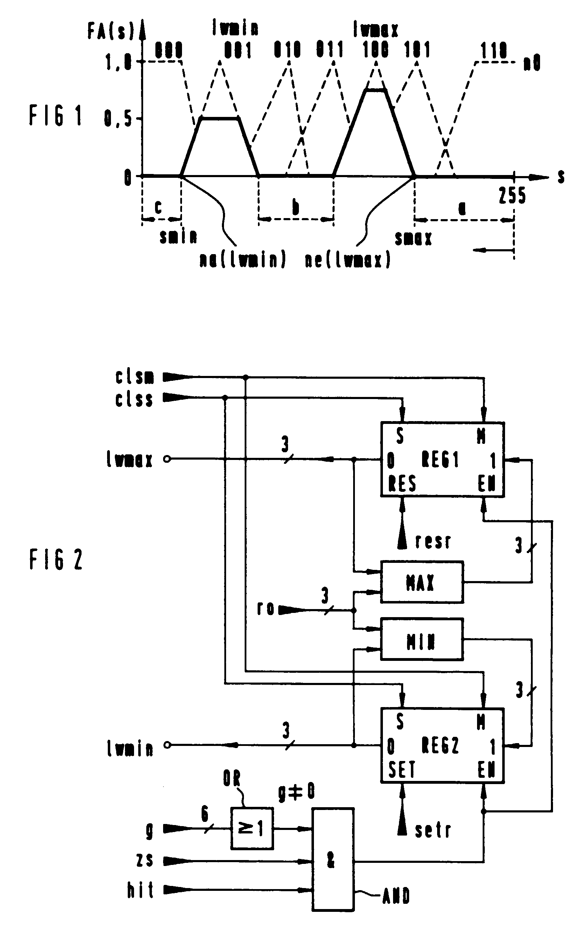

In Figur 1 ist eine unscharfe Vereinigungsmenge FA(s) über Rasterungswerte s aufgetragen, die eine Verteilung möglicher scharfer Ausgangswerte darstellt, aus der in einer Defuzzifikationsschaltung ein scharfer Ausgangswert erzeugbar ist. Die unscharfe Vereinigungsmenge FA(s) wird durch gewichtete Zugehörigkeitsfunktionen der linguistischen Werte der Ausgangsvariablen gebildet, wobei die Zugehörigkeitsfunktionen der linguistischen Werte der Ausgangsvariablen gestrichelt eingezeichnet und mit Nummern no = 000 ... 110 bezeichnet sind und wobei eine Zugehörigkeitsfunktion des linguistischen Wertes mit der Nummer no = 001 mit dem Gewichtungsfaktor 0,5 gewichtet, also beim Wert 0,5 "abgeschnitten" ist, und die Zugehörigkeitsfunktion des linguistischen Wertes mit der Nummer no = 100 mit einem Faktor 0,75 gewichtet ist. Der linguistische Wert mit der Nummer no = 001 stellt hierbei den linguistischen Wert mit einer minimalen Nummer lwmin und der linguistische Wert mit der Nummer no = 100 den linguistischen Wert mit einer maximalen Nummer lwmax dar, wobei die Nummern der linguistischen Werte mit steigendem Rasterungswert s größer werden.

Bei bekannten Fuzzy-Inference-Prozessoren wird meist ausgehend von einem maximal möglichen Rasterungswert, hier beispielsweise s = 255, für jeden Rasterungswert bis zum Rasterungswert s = 0 der Wert der unscharfen Vereinigungsmenge Fa(s) gebildet und einer nachgeschalteten Defuzzifikationsschaltung zugeführt. Dies gilt auch dann, wenn die unscharfe Vereinigungsmenge FA(s) für Bereiche a, b und c von s gleich Null ist.

Beim meistens verwendeten Defuzzifikationsverfahren, dem Schwerpunktsverfahren oder COG-Verfahren, wird , ähnlich wie in der Mechanik, ein Quotient aus einem Gesamtmoment aus den gewichteten Zugehörigkeitsfunktionen der linguistischen Werte der Ausgangsvariablen und der Gesamtfläche aus den gewichteten Zugehörigkeitsfunktionen der linguistischen Werte der Ausgangsvariablen gebildet. Dabei kann bei der Bildung der Gesamtfläche der Bereich a zwischen den maximal möglichen Wert von s, beispielsweise s = 255, und dem auftretenden maximalen Wert von s = smax, und der Bereich b zwischen zwei Zugehörigkeitsfunktionen von linguistischen Werten der Ausgangsvariablen und der Bereich c zwischen dem Wert s = 0 und dem auftretenden minimalen Wert von s = smin bei der Berechnung unberücksichtigt bleiben. Bei der Berechnung des Gesamtmomentes hingegen kann nur der Bereich a gänzlich unberücksichtigt bleiben und der Bereich c ist als additive Konstante zum Quotienten bzw. als Verschiebung des Schwerpunktes berücksichtigbar, wobei die additive Konstante bzw. die Verschiebung des Schwerpunkts smin beträgt.

Bei den erfindungsgemäßen Verfahren werden nun die Bereiche a und c erkannt und Zugehörigkeitsfunktionswerte der Vereinigungsmenge FA(s) aus den gewichteten linguistischen Werten der Ausgangsvariablen nur innerhalb eines Intervalls zwischen dem minimalen Rasterungswert smin und dem maximalen Rasterungswert smax berechnet und an die nachgeschaltete Defuzzifikationsschaltung zur Weiterverarbeitung weitergeleitet.

Hierzu wird in einem ersten und zweiten erfindungsgemäßen Verfahren zuerst aus den Nummern r0 der linguistischen Werte der Ausgangsvariablen aller Regeln eine maximale Nummer lwmax für einen linguistischen Wert der Ausgangsvariablen und die minimale Nummer lwmin für einen linguistischen Wert der Ausgangsvariablen ermittelt.

In Figur 2 ist dabei ein Schaltbild zur Verdeutlichung eines bevorzugten ersten Schrittes der beiden erfindungsgemäßen Verfahren gezeigt. Die in Figur 2 gezeigte Schaltung besteht aus zwei Registern REG1 und REG2, einer Minimumschaltung MIN, einer Maximumschaltung MAX, einer ODER-Schaltung OR und einer Dreifach-UND-Schaltung AND.

Der Maximumschaltung MAX werden nacheinander die Nummer ro der linguistischen Werte der Ausgangsvariablen aller Regeln und über einen zweiten Eingang das jeweilige Ausgangssignal des ersten Registers REG1 zugeführt, dessen Eingang mit dem Ausgang der Maximumschaltung MAX beschaltet ist. In entsprechender Weise werden der Minimumschaltung MIN über einen ersten Eingang der Reihe nach die Nummern ro der linguistischen Werte der Ausgangsvariablen aller Regeln über einen zweiten Eingang und das Ausgangssignal des Registers REG2 zugeführt, dessen Eingang mit dem Ausgang der Minimumschaltung MIN beschaltet ist. Der Ausgang des Registers REG1 bzw. der zweite Eingang der Maximumschaltung MAX führt eine, beispielsweise 3 Bit breite, maximale Nummer lwmax für einen linguistischen Wert der Ausgangsvariablen und der Ausgang des Register REG2 bzw. der zweite Eingang der Minimumschaltung MIN führt eine minimale Nummer lwmin für einen linguistischen Wert der Ausgangsvariablen. Die beiden Register REG1 und REG2 besitzen jeweils einen Master- und einen Slave-Teil, die über entsprechende Clocksignale clsm und clss ansteuerbar sind. Das Register REG1 ist durch ein Rücksetzsignal resr rücksetzbar und das Register REG2 ist durch ein Setzsignal setr setzbar. Beide Register REG1 und REG2 besitzen einen Aktivierungseingang EN der mit dem Ausgangssignal der UND-Schaltung AND beschaltet ist. Durch die ODER-Schaltung OR werden alle Bits, beispielsweise 6 Bits, eines Gewichtungsfaktors g ODER-verknüpft, das heißt die Bedingung g ungleich Null realisiert. Ein erster Eingang der UND-Schaltung AND ist mit dem Ausgangssignal der ODER-Schaltung OR, ein zweiter Eingang mit einem Aktivierungssignal sz und ein dritter Eingang mit einem Treffersignal hit, das angibt, ob der Bedingungsteil einer jeweiligen Regel zutrifft oder nicht, beschaltet. Wird nun eine Zugehörigkeitsfunktion eines linguistischen Wertes der Ausgangsvariablen nicht mit Null gewichtet, ist das Aktivierungssignal zs gleich 1 und zeigt das Treffersignal hit einen erfüllten Bedingungsteil der jeweiligen Regel an, so wird in das Register REG1 das Maximum aus der bisherigen maximalen Nummer lwmax und der Nummer ro des linguistischen Wertes der Ausgangsvariablen der jeweiligen Regel und in das Register REG2 das Minimum aus der bisherigen minimalen Nummer lwmin und der Nummer r0 des linguistischen Wertes der Ausgangsvariablen der jeweiligen Regel eingeschrieben, wodurch nach der letzten Regel die für alle Regeln maximale Nummer lwmax und die für alle Regeln minimale Nummer lwmin festgelegt wird, bei denen jeweilg g ≠ 0 ist.

Bei einem ersten erfindungsgemäßen Verfahren wird in einem zweiten Schritt die für alle Regeln minimale Nummer lwmin und die für alle Regeln maximale Nummer lwmax für einen linguistischen Wert der Ausgangsvariablen und die für alle Regeln maximale Nummer lwmax für einen linguistischen Wert der Ausgangsvariablen zur relativen Adressierung eines Speichers benutzt. Für jede Nummer eines linguistischen Wertes der Ausgangsvariablen ist ein Anfangswert na und ein Endwert ne der Zugehörigkeitsfunktion der jeweiligen linguistischen Werte der Ausgangsvariablen in einem Speicherwort abgelegt, wobei Anfangs- und Endwerte als erste bzw. letzte Nullstellen in Richtung steigender Rasterungswerte S definiert sind. So kann beispielsweise das obere Byte eines 16 Bitwortes für einen jeweiligen Anfangswert na und das untere Byte des 16 Bitwortes für den jeweiligen Endwert der Zugehörigkeitsfunktion verwendet werden. Ein minimaler Rasterungswert smin wird nun dadurch ermittelt, daß der Anfangswert na (lwmin) für die minimale Nummer lwmin für einen linguistischen Wert der Ausgangsvariablen aus dem durch die relative Adresse lwmin adressiertem Speicherwort ausgelesen wird und ein maximaler Rasterungswert dadurch ermittelt wird, daß ein Endwert ne (lwmax) für die maximale Nummer lwmax für einen linguistischen Wert der Ausgangsvariablen dadurch ermittelt wird, daß ein durch die relative Adresse lwmax adressiertes Speicherwort gelesen wird. Hierbei sind für jeden linguistischen Wert der Ausgangsvariablen beispielsweise 8 Bits für einen Anfangswert und 8 Bit für einen Endwert der Zugehörigkeitsfunktion eines linguistischen Wertes der Ausgangsvariablen erforderlich.

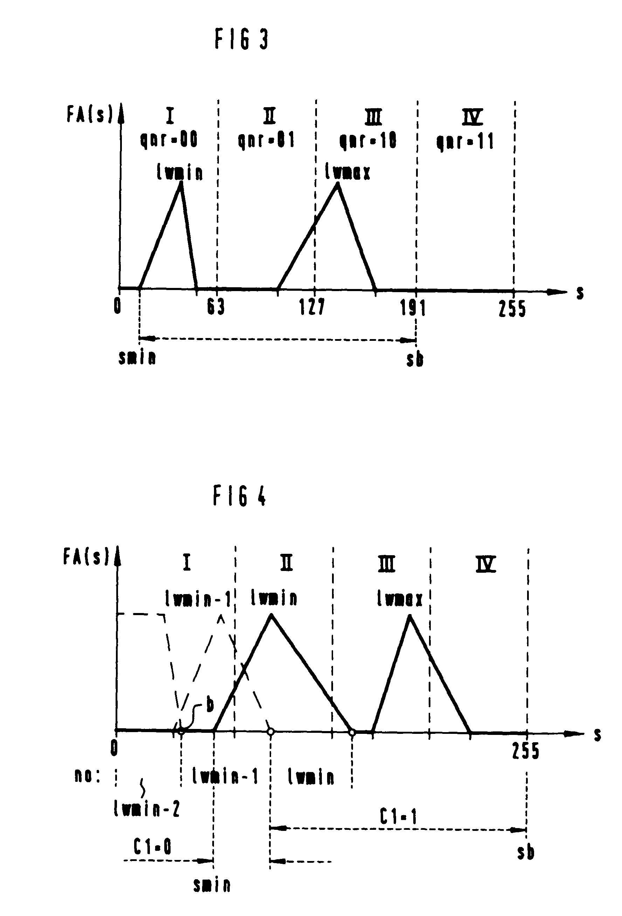

Etwas weniger Speicher ist bei der sogenannten Quadrantenmethode, also einem zweiten erfinderischen Verfahren, erforderlich, bei dem in einem zweiten Schritt nach der Ermittlung der minimalen und maximalen, lwmin und lwmax, die maximale Nummer lwmax zur Adressierung innerhalb eines in einem Speicher befindlichen Speicherwortes benutzt wird, wobei für jeden linguistischen Wert der Ausgangsvariablen jeweils eine Quadrantennummer qnr mit beispielsweise 2 Bit, in dem Speicherwort, mit beispielsweise 16 Bit, vorgesehen ist und die Quadrantennummer die beiden höchstwertigen Bits eines maximalen Rasterungswertes sb bildet, dessen übrige Bits aus logischen Einsen bestehen. Der minimale Rasterungswert smin wird bei diesem Verfahren in einem dritten Schritt dadurch ermittelt, daß ausgehend vom maximalen Rasterungsschritt sb solange eine Verringerung des Rasterungswertes s erfolgt, bis der Zugehörigkeitsfunktionswert des linguistischen Wertes mit der minimalen Nummer lwmin gleich Null ist und der Rasterungswert s den minimalen Rasterungswert smin annimmt. Zur Erläuterung des zweiten erfindungsgemäßen Verfahrens ist in Figur 3 eine unscharfe Vereinigungsmenge FA(s) über den Rasterungswerten s dargestellt, die aus zwei gewichteten Zugehörigkeitsfunktionen von linguistischen Werten der Ausgangsvariablen besteht, wobei der erste linguistische Wert die minimale Nummer lwmin und der zweite linguistische Wert die maximale Nummer lwmax besitzt. Der maximal mögliche Rasterungsbereich erstreckt sich bei diesem Beispiel von s = 0 bis s = 255 und ist in einen ersten Quadranten I von s = 0 bis s = 63, einen zweiten Quadranten II von 64 bis 127, einen dritten Quadranten III von s = 128 bis 191 und einen vierten Quadranten IV von s = 192 bis 255 aufgeteilt. Der erste Quadrant I besitzt dabei die Quadrantennummer qnr = 00, der zweite Quadrant II die Quadrantennummer qnr = 01, der dritte Quadrant III die Quadrantennummer qnr = 10 und der vierte Quadrant IV die Quadrantennummer qnr = 11. Die oberen Quadrantengrenzen bei s = 63, s = 127, s = 191 und s = 255 ergeben sich durch die Verwendung der Quadrantennummer qnr als die beiden höchstwertigen Bits des Rasterungswertes s, dessen restliche Bits gleich 1 sind. Die Zugehörigkeitsfunktion für den lingustistischen Wert mit der Nummer lwmin liegt vollständig im ersten Quadranten I und die Zugehörigkeitsfunktion für den lingustischen Wert mit der Nummer lwmax liegt sowohl im zweiten als auch im dritten Quadranten und die Nullstelle der Zugehörigkeitsfunktion des linguistischen Wertes mit der Nummer lwmax ist kleiner als die obere Quadrantengrenze des dritten Quadranten III. Da die Zugehörigkeitsfunktion für den linguistischen Wert mit der Nummer lwmax auch im dritten Quadranten III liegt ist die Quadrantennummer qnr = 10 und damit s = 10111111, was in dezimaler Form den Wert s = sb = 191 entspricht. Bei diesem Verfahren wird gegenüber dem ersten Verfahren im allgemeinen etwas mehr Zeit für die Inferenzbildung aber dafür weniger Speicherplatz benötigt, da eine Rasterung stets mit einer Quadrantenobergrenze beginnt und bis zu einem Rasterungswert s = smin fortgesetzt wird.
Ist ein Speicher der Zugehörigkeitsfunktionen der linguistischen Werte der Ausgangsvariablen so organisiert, daß für einen bestimmten Rasterungswert s von beispielsweise maximal zwei möglichen Nummern für getroffene linguistische Werte der Ausgangsvariablen stets die niedrigstmögliche Nummer für einen linguistischen Wert der Ausgangsvariablen erzeugt wird, so ist eine besondere Ausgestaltung des zweiten erfindungsgemäßen Verfahrens erforderlich, bei dem in einem dritten Schritt die minimale Nummer smin auf eine spezielle Weise ermittelt wird.

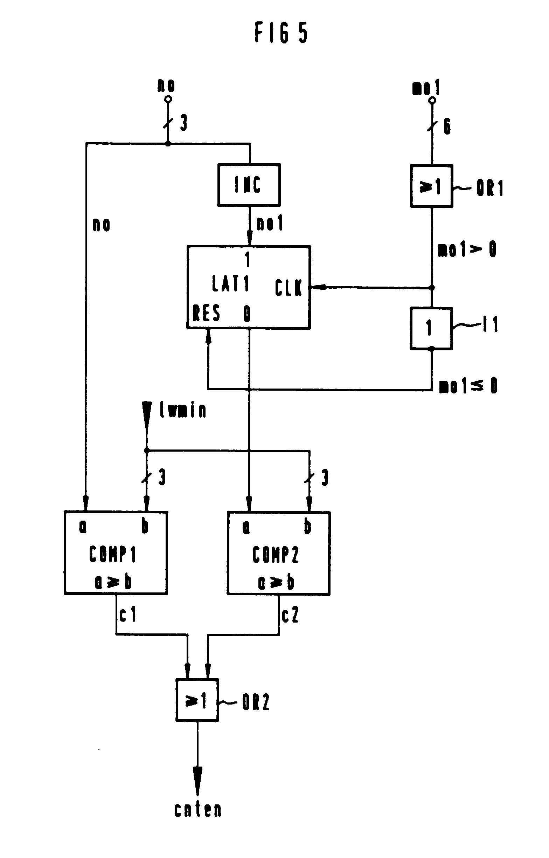

Zur Verdeutlichung dieser besonderen Ausgestaltung des zweiten erfindungsgemäßen Verfahrens ist in Figur 4, wie in Figur 3, eine unscharfe Vereinigungsmenge FA(s) über den Rasterungswerten s und mit einer Einteilung in die vier Quadranten I ... IV dargestellt. Die Zugehörigkeitsfunktion des linguistischen Wertes mit der Nummer lwmax befindet sich dabei im dritten und vierten Quadranten III und IV und die Zugehörigkeitsfunktion des linguistischen Wertes mit der Nummer lwmin erstreckt sich über die Quadranten I, II und III, wobei sich zwischen den beiden Zugehörigkeitsfunktionen mit den Nummern lwmin und lwmax eine Lücke befindet. Zusätzlich sind Zugehörigkeitsfunktionen für linguistische Werte mit den Nummer lwmin -1 und lwmin -2 gestrichelt eingezeichnet, wobei sich die Zugehörigkeitsfunktion des linguistischen Wertes mit der Nummer lwmin -1 im ersten und zweiten Quadranten I und II und die Zugehörigkeitsfunktion des linguistischen Wertes mit der Nummer lwmin -2 vollständig im ersten Quadranten I befinden. Ausgehend von einem maximalen Rasterungswert sb, der in diesem Beispiel den Wert s = sb = 255 besitzt da die Zugehörigkeitsfunktion des linguistischen Wertes mit der Nummer lwmax auch im vierten Quadranten IV liegt, erfolgt eine Verringerung des Rasterungswertes s, solange die Nummer no des linguistischen Wertes der Ausgangsvariablen größer gleich der minimalen Nummer lwmin eines linguistischen Wertes der Ausgangsvariablen ist. Nach einem Wechsel auf die nächstniedrigere minimale Nummer lwmin -1 für einen linguistischen Wert der Ausgangsvariablen aufgrund der Speicherorganisation, wird die Rasterung fortgesetzt bis ein zur um Eins erhöhten Nummer no1 = no + 1 des linguistischen Wertes der Ausgangsvariablen gehöriger Zugehörigkeitsfunktionswert mo1 des linguistischen Wertes der Ausgangsvariablen gleich Null ist oder solange die nach einem erneuten Wechsel auf eine übernächst niedrigere minimale Nummer lwmin -2 für einen linguistischen Wert der Ausgangsvariablen die um Eins erhöhte Nummer nol des linguistischen Wertes der Ausgangsvariablen kleiner als die minimale Nummer lwmin eines linguistischen Wertes der Ausgangsvariablen ist. Nach Beendigung der Rasterung aufgrund der obengenannten Abbruchbedingungen liegt für den Rasterungswert s der minimale Rasterungswert smin vor.

In Figur 5 ist eine Schaltung zur Durchführung der besonderen Ausgestaltung des zweiten erfindungsgemäßen Verfahrens gezeigt, die ein Halteglied (latch) LAT1, einen ersten und zweiten Größer-Gleich-Komparator COMP1 und COMP2 mit der Vergleichsbedingung a ≥ b, einen Inkrementierer INC, ein erstes und zweites ODER-Gatter OR1 und OR2 und eine Invertierschaltung I1 enthält. Die aus dem Speicher kommende Nummer no für den linguistischen Wert der Ausgangsvariablen wird zum einen einem a-Eingang des ersten Komparators COMP1 und zum anderen einem Eingang des Inkrementierers INC zugeführt, wobei im letzteren die um Eins erhöhte Nummer nol erzeugt und einen Eingang des Halteglieds LAT1 zugeführt wird. Der a-Eingang des zweiten Komparators COMP2 erhält das Ausgangssignal des Halteglieds LAT1. Die b-Eingänge der Komparatoren COMP1 und COMP2 erhalten jeweils die minimale Nummer für den linguistischen Wert der Ausgangsvariablen. Ein Ausgangssignal c1 des Komparators COMP1 und ein Ausgangssignal c2 des Komparators COMP2 ist durch das ODER-Gatter OR2 zu einem Zähler-Aktivierungssignal cnten verknüpft. Der zur um Eins erhöhten Nummer nl gehörige Wert mol einer Zugehörigkeitsfunktion eines oberen getroffenen linguistischen Wertes der Ausgangsvariablen wird durch das erste ODER-Gatter OR1 bitweise zu dem Ausgangssignal verknüpft, das der Bedingung mol ungleich 000000 entspricht und ein Taktsignal CLK für das Halteglied LAT1 darstellt. Das Ausgangssignal der ODER-Schaltung OR1 wird über den Inverter I1 invertiert und dient als Rücksetzsignal RES für das Halteglied LAT1, wobei das Halteglied LAT1 rückgesetzt wird, sobald der Wert mo1 = 000000 beträgt.

Solange die Nummer no größer gleich lwmin ist, also a größer gleich b ist, ist das Signal c1 = 1 und das Zähler-Aktivierungssignal cnten ebenfalls 1, wodurch ein Rückwärtszähler aktiv ist und eine Rasterung in Richtung kleiner werdender Rasterungswerte s erfolgt. Wegen der Speicherorganisation der Zugehörigkeitsfunktionen für den linguistischen Wert der Ausgangsvariablen wechselt die Nummer no ab Beginn der Überlappung zwischen der Zugehörigkeitsfunktion des linguistischen Wertes mit der Nummer lwmin -1 und der Zugehörigkeitsfunktion des linguistischen Wertes mit der Nummer lwmin in Richtung kleinerer Rasterungswerte s auf die nächstkleinere Nummer no = lwmin -1. Schon bevor die Zugehörigkeitsfunktion des linguistischen Wertes mit der Nummer lwmin ihren Anfangspunkt erreicht hat, wird deshalb die Nummer no = 1wmin-1 ausgelesen. Als Folge geht das Signal c1 auf 0 zurück. Damit aber das Zähleraktivierungssignal cnten bis smin auf 1 gehalten wird, muß die Rasterung in der Regel fortgesetzt werden. Ein Kriterium für den Abbruch der Rasterung muß allein aufgrund der Daten der linguistischen Werte der Ausgangsvariablen herbeigeführt werden. Solange die Bedingung, daß der Wert mo1 größer als 0 ist, erfüllt ist, wird die vom Inkrementierer erzeugte Nummer nol über das Halteglied latl auf den zweiten Komparator COMP2 geschaltet. Der Komparator COMP2 führt im Vergleich m01 großer gleich lwmin durch. Ist diese Bedingung erfüllt, dann ist das Signal c2 und damit das Zähleraktivierungssignal auf 1. Für den Wert mo1 = 1 wird das Halteglied LAT1 zurückgesetzt und anstelle von der um Eins erhöhten Nummer no1 liegt der Ausgang des auf 0 zurückgesetzten Haltegliedes am Eingang des Komparators COMP2. Nur für den Fall, daß auch die Nummer lwmin gleich 000 ist, bleibt das Ausgangssignal c2 des Komparators COMP2 auf 1, andernfalls geht das Signal c2 auf 0. Das Signal c2 hält somit (bei c1 = 0) das Zähleraktivierungssignal cnten aufgrund der ODER-Verknüpfung zwischen den Signalen c2 und c1 solange auf 1, bis schließlich der Anfangspunkt smin der Zugehörigkeitsfunktion des linguistischen Wertes mit der Nummer lwmin erreicht ist.

Bei beiden erfindungsgemäßen Verfahren hängt die für die Inferenzbildung benötigte Zeit und damit die gesamte Verarbeitungszeit von der Anzahl der durchgeführten Rasterungsschritte ab. Besonders bei einer verhältnismäßig kleinen Regelanzahl und kleinen Anzahl von Eingangsvariablen stellt die Zeit für die Inferenzbildung einen wesentlichen Bestandteil der gesamten Verarbeitungszeit dar. Im ersten erfindungsgemäßen Verfahren hängt die für die Inferenzbildung benötigte Zeit linear von der Anzahl der Rasterungsschritte ab und beim zweiten erfindungsgemäßen Verfahren muß im schlechtesten Fall ein Viertel der maximal möglichen Rasterungswerte unnötigerweise ausgeführt werden.

Besonders bei Extremsituationen, in denen schnell reagiert werden muß, wird hierbei eine besonders kurze Verarbeitungszeit erreicht, da die in diesem Fall "feuernden" Regeln nur auf einen bestimmten oder bestenfalls auf wenige benachbarte linguistische Werte der Ausgangsvariablen Bezug nehmen und das Rasterungsintervall zwischen smax und smin in diesen Fällen vergleichsweise klein ist.

## Patentansprüche

1. Verfahren zur schnellen Inferenzbildung in einem Fuzzy-Inference-Prozessor,
bei dem in einem ersten Schritt aus den Nummern (ro) der linguistischen Werte der Ausgangsvariablen aller Regeln eine maximale Nummer (lwmax) für einen linguistischen Wert der Ausgangsvariablen und eine minimale Nummer (lwmin) für einen linguistischen Wert der Ausgangsvariablen ermittelt werden,
bei dem in einem zweiten Schritt die minimale Nummer (lwmin) für einen linguistischen Wert der Ausgangsvariablen und die maximale Nummer (lwmax) für einen linguistischen Wert der Ausgangsvariablen zur relativen Adressierung eines Speichers benutzt werden, der für jede Nummer eines linguistischen Wertes der Ausgangsvariablen einen Anfangswert (na) und einen Endwert (ne) der Zugehörigkeitsfunktion der jeweiligen linguistischen Werte der Ausgangsvariablen enthält, und ein minimaler Rasterungswert (smin) aus dem durch die minimale Nummer des linguistischen Wertes der Ausgangsvariablen adressierten Anfangswertes (na(lwmin)) und ein maximaler Rasterungswert (smax) aus dem durch die maximale Nummer eines linguistischen Wertes der Ausgangsvariablen adressierten Endwert (ne(lwmax)) gebildet wird, und
bei dem in einem dritten Schritt nur Zugehörigkeitsfunktionswerte einer Vereinigungsmenge (FA(s)) aus gewichteten Zugehörigkeitsfunktionen der linguistischen Werte der Ausgangsvariablen innerhalb eines Intervalls zwischen dem minimalen und maximalen Rasterungswert (smin, smax) ermittelt und an eine Defuzzifikationsschaltung zur Weiterverarbeitung weitergeleitet werden.

2. Verfahren nach Anspruch 1,
bei dem im ersten Schritt die maximale Nummer (lwmax) für einen linguistischen Wert der Ausgangsvariablen dadurch ermittelt wird, daß für alle Regeln jeweils der Reihe nach aus einer Nummer (ro) des linguistischen Wertes der Ausgangsvariablen und einer Nummer aus einem ersten Register (REG1) ein jeweiliges Maximum gebildet wird und das jeweilige Maximum in das erste Register übernommen wird, sofern ein Gewichtungsfaktor (g) für die Zugehörigkeitsfunktion des jeweiligen linguistischen Wertes der Ausgangsvariablen verschieden von Null und der Bedingungsteil der jeweiligen Regel erfüllt ist (hit = 1), und daß nach der letzten Regel die maximale Nummer (lwmax) für den linguistischen Wert der Ausgangsvariablen am Ausgang des ersten Registers (REG1) abgenommen wird, und
bei dem im ersten Schritt die minimale Nummer (lwmin) für einen linguistischen Wert der Ausgangsvariablen dadurch ermittelt wird, daß für alle Regeln jeweils der Reihe nach aus einer Nummer (ro) des linguistischen Wertes der Ausgangsvariablen und einer Nummer aus einem zweiten Register (REG2) ein jeweiliges Minimum gebildet wird und das jeweilige Minimum in das zweite Register übernommen wird, sofern der Gewichtungsfaktor (g) für die Zugehörigkeitsfunktion des jeweiligen linguistischen Wertes der Ausgangsvariablen verschieden von Null und der Bedingungsteil der jeweiligen Regel erfüllt ist (hit = 1), und daß nach der letzten Regel die minimale Nummer (lwmin) für einen linguistischen Wert der Ausgangsvariablen am Ausgang des zweiten Registers (REG2) abgenommen wird.

3. Verfahren zur schnellen Inferenzbildung in einem Fuzzy-Logic-Prozessor
bei dem in einem ersten Schritt aus den Nummern (ro) und der linguistischen Werte der Ausgangsvariablen aller Regeln eine maximale Nummer (lwmax) für einen linguistischen Wert der Ausgangsvariablen und eine minimale Nummer (lwmin) für einen linguistischen Wert der Ausgangsvariable ermittelt werden,
bei dem in einem zweiten Schritt die maximale Nummer (lwmax) zur Adressierung innerhalb eines in einem Speicher befindlichen Speicherwortes benutzt wird, das für jeden linguistischen Wert der Ausgangsvariablen jeweils eine Quadrantennummer (qnr) enthält und die Quadrantennummer die beiden höchstwertigen Bits eines maximalen Rasterungswertes (sb) bilden, dessen übrige Bits aus logischen Einsen bestehen,
bei dem in einem dritten Schritt ausgehend vom maximalen Rasterungswert (sb) solange eine Verringerung des Rasterungswertes (s) erfolgt, bis der Zugehörigkeitsfunktionswert des linguistischen Wertes der Ausgangsvariablen mit der minimalen Nummer (lwmin) gleich Null ist und der Rasterungswert (s) den minimalen Rasterungswert (smin) annimmt, und
bei dem in einem vierten Schritt nur Zugehörigkeitsfunktionswerte einer Vereinigungsmenge (FA(s)) aus den gewichteten linguistischen Werten der Ausgangsvariablen innerhalb eines Intervalls zwischen dem minimalen und maximalen Rasterungswert (smin, sb) ermittelt und an eine Defuzzifikationsschaltung zur Weiterverarbeitung weitergeleitet werden.

4. Verfahren nach Anspruch 3,
bei dem im ersten Schritt die maximale Nummer (lwmax) für einen linguistischen Wert der Ausgangsvariablen dadurch ermittelt wird, daß für alle Regeln jeweils der Reihe nach aus einer Nummer (ro) des linguistischen Wertes der Ausgangsvariablen und einer Nummer aus einem Register (REG1) ein jeweiliges Maximum gebildet wird und das jeweilige Maximum in das erste Register übernommen wird, sofern ein Gewichtungsfaktor (g) für die Zugehörigkeitsfunktion des jeweiligen linguistischen Wertes der Ausgangsvariablen verschieden von Null und der Bedingungsteil der jeweiligen Regel erfüllt ist (hit = 1), und daß nach der letzten Regel die maximale Nummer (lwmax) für den linguistischen Wert der Ausgangsvariablen am Ausgang des ersten Registers (RG1) abgenommen wird, und
bei dem im ersten Schritt die minimale Nummer (lwmin) für einen linguistischen Wert der Ausgangsvariablen dadurch ermittelt wird, daß für alle Regeln jeweils der Reihe nach aus einer Nummer (ro) des linguistischen Wertes der Ausgangsvariablen und einer Nummer aus einem Register (REG2) ein jeweiliges Minimum gebildet wird und das jeweilige Minimum in das zweite Register übernommen wird, sofern der Gewichtungsfaktor (g) für die Zugehörigkeitsfunktion des jeweiligen linguistischen Wertes der Ausgangsvariablen verschieden von Null und der Bedingungsteil der jeweiligen Regel erfüllt ist (hit = 1), und daß nach der letzten Regel die minimale Nummer (lwmin) für einen linguistischen Wert der Ausgangsvariablen am Ausgang des zweiten Registers (REG2) abgenommen wird.

5. Verfahren nach Anspruch 3 oder 4,
bei dem ein Speicher für Zugehörigkeitsfunktionen der linguistischen Werte der Ausgangsvariablen so organisiert ist, daß für einen bestimmten Rasterungswert (s) von maximal zwei möglichen Nummern für getroffene linguistische Werte der Ausgangsvariablen stets die niedrigstmögliche Nummer für einen getroffenen linguistischen Wert der Ausgangsvariablen erzeugt wird,
bei dem im dritten Schritt ausgehend vom maximalen Rasterungswert (sb) eine Verringerung des Rasterungswertes (s) erfolgt, solange die Nummer (no) des lingustischen Wertes der Ausgangsvariablen größer gleich der minimalen Nummer (lwmin) eines linguistischen Wertes der Ausgangsvariablen ist und dann nach einem Wechsel auf eine nächstniedrigere minimale Nummer (lwmin-1) für einen linguistischen Wert der Ausgangsvariablen, die Rasterung fortgesetzt wird bis ein zur um Eins erhöhten Nummer (no1) des linguistischen Wertes der Ausgangsvariablen gehöriger Zugehörigkeitsfunktionswert (mo1)des linguistischen Wertes der Ausgangsvariablen gleich Null ist oder nach einem erneuten Wechsel auf eine übernächstniedrigere minimale Nummer (lwmin-2) für einen linguistischen Wert der Ausgangsvariablen, die um Eins erhöhte Nummer (no1) des linguistischen Wertes der Ausgangsvariablen kleiner als die minimale Nummer (lwmin) eines linguistischen Wertes der Ausgangsvariablen ist, wobei am Ende der Rasterung der minimale Rasterungswert smin vorliegt.

## Claims

1. Method for fast inference formation in a fuzzy inference processor,
in which, in a first step, the numbers (ro) of the linguistic values of the output variables of all the rules are used to determine a maximum number (lwmax) for a linguistic value of the output variables and a minimum number (lwmin) for a linguistic value of the output variables,
in which, in a second step, the minimum number (lwmin) for a linguistic value of the output variables and the maximum number (lwmax) for a linguistic value of the output variables are used for relative addressing of a memory which contains an initial value (na) for each number of a linguistic value of the output variables and a final value (ne) of the association function of the respective linguistic values of the output variables, and a minimum latching value (smin) is formed from the initial value (na(lwmin)) addressed by the minimum number of the linguistic value of the output variables, and a maximum latching value (smax) is formed from the final value (ne(lwmax)) addressed by the maximum number of a linguistic value of the output variables, and
in which, in a third step, only association function values of a combination set (FA(s)) are determined from weighted association functions of the linguistic values of the output variables within an interval between the minimum and the maximum latching value (smin, smax) and are passed on to a defuzzification circuit for further processing.

2. Method according to Claim 1,
in which, in the first step, the maximum number (lwmax) for a linguistic value of the output variables is determined in that, for all the rules, a respective maximum is in each case formed sequentially from a number (ro) of the linguistic value of the output variables and a number from a first register (REG1), and the respective maximum is transferred to the first register, provided a weighting factor (g) for the association function of the respective linguistic value of the output variables is not zero and the condition part of the respective rule is satisfied (hit = 1), and in that, having taken into account the last rule, the maximum number (lwmax) for the linguistic value of the output variables is tapped off at the output of the first register (REG1), and
in which, in the first step, the minimum number (lwmin) for a linguistic value of the output variables is determined in that, for all the rules, a respective minimum is in each case formed sequentially from a number (ro) of the linguistic value of the output variables and a number from a second register (REG2), and the respective minimum is transferred to the second register, provided the weighting factor (g) for the association function of the respective linguistic value of the output variables is not zero and the condition part of the respective rule is satisfied (hit = 1), and in that, having taken into account the last rule, the minimum number (lwmin) for a linguistic value of the output variables is tapped off at the output of the second register (REG2).

3. Method for fast inference formation in a fuzzy logic processor in which, in a first step, the numbers (ro) and the linguistic values of the output variables of all the rules are used to determine a maximum number (lwmax) for a linguistic value of the output variables and a minimum number (lwmin) for a linguistic value of the output variable,
in which, in a second step, the maximum number (lwmax) is used for addressing within a memory word which is located in a memory and in each case contains a quadrant number (qnr) for each linguistic value of the output variables, and the quadrant numbers form the two most significant bits of a maximum latching value (sb), whose other bits consist of logic ones,
in which, in a third step, starting from the maximum latching value (sb), the latching value (s) is reduced until the association function value of the linguistic value of the output variables with the minimum number (lwmin) is equal to zero and the latching value (s) assumes the minimum latching value (smin), and
in which, in a fourth step, only association function values of a combination set (FA(s)) are determined from the weighted linguistic values of the output variables within an interval between the minimum and the maximum latching value (smin, sb), and are passed on to a defuzzification circuit for further processing.

4. Method according to Claim 3,
in which, in the first step, the maximum number (lwmax) for a linguistic value of the output variables is determined in that, for all the rules, a respective maximum is in each case formed sequentially from a number (ro) of the linguistic value of the output variables and a number from a first register (REG1), and the respective maximum is transferred to the first register, provided a weighting factor (g) for the association function of the respective linguistic value of the output variables is not zero and the condition part of the respective rule is satisfied (hit = 1), and in that, having taken into account the last rule, the maximum number (lwmax) for the linguistic value of the output variables is tapped off at the output of the first register (REG1), and
in which, in the first step, the minimum number (lwmin) for a linguistic value of the output variables is determined in that, for all the rules, a respective minimum is in each case formed sequentially from a number (ro) of the linguistic value of the output variables and a number from a register (REG2), and the respective minimum is transferred to the second register, provided the weighting factor (g) for the association function of the respective linguistic value of the output variables is not zero and the condition part of the respective rule is satisfied (hit = 1), and in that, having taken into account the last rule, the minimum number (lwmin) for a linguistic value of the output variables is tapped off at the output of the second register (REG2).

5. Method according to Claim 3 or 4,
in which a memory for association functions of the linguistic values of the output variables is organized such that, for a specific latching value (s) of a maximum of two possible numbers for relevant linguistic values of the output variables, the lowest possible number is always produced for a relevant linguistic value of the output variables,
in which, in the third step, starting from the maximum latching value (sb), the latching value (s) is reduced as long as the number (no) of the linguistic value of the output variables is greater than or equal to the minimum number (lwmin) of a linguistic value of the output variables and then, after a change to a next-lower minimum number (lwmin-1) for a linguist value of the output variables, the latching is continued until an association function value (mo1), which is associated with a number (no1) (increased by one) of the linguistic value of the output variables, of the linguistic value of the output variables is equal to zero or, after another change to a next-but-one lower minimum number (lwmin-2) for a linguistic value of the output variables, the number (no1) (increased by one) of the linguistic value of the output variables is less than the minimum number (lwmin) of a linguistic value of the output variables, in which case the minimum latching value smin occurs at the end of the latching.

## Revendications

1. Méthode pour le traitement rapide d'inférence dans un processeur à logique floue,
dans laquelle on détermine dans une première étape, à partir des numéros (ro) des valeurs linguistiques de la variable de départ de toutes les règles, un numéro maximal (lwmax) pour une valeur linguistique de la variable de départ et un numéro minimal (lwmin) pour une valeur linguistique de la variable de départ,
dans laquelle on utilise dans une seconde étape, le numéro minimal (lwmin) d'une valeur linguistique de la variable de départ et le numéro maximal (lwmax) d'une valeur linguistique de la variable de départ pour l'adressage relatif d'une mémoire, laquelle contient pour chaque numéro d'une valeur linguistique de la variable de départ une valeur initiale (na) et une valeur finale (ne) de la fonction d'appartenance des valeurs linguistiques respectives de la variable de départ, et on forme une valeur minimale d'exploration (smin) à partir de la valeur initiale (na (lwmin) ) adressée par le numéro minimal de la valeur linguistique de la variable de départ et une valeur maximale d'exploration (smax) à partir de la valeur finale (ne (lwmax) ) adressée par le numéro maximal d'une valeur linguistique de la variable de départ, et
dans laquelle on détermine dans une troisième étape, uniquement les valeurs de fonctions d'appartenance d'un ensemble (FA(s) ) constitué de fonctions d'appartenance pondérées des valeurs linguistiques de la variable de départ, à l'intérieur d'un intervalle entre les valeurs minimale et maximale d'exploration (smin, smax), et on les transmet à un circuit de défuzzification pour traitement ultérieur.

2. Méthode selon la revendication 1,
dans laquelle on détermine dans la première étape, le numéro maximal (lwmax) d'une valeur linguistique de la variable de départ en formant pour toutes les règles, à chaque fois dans l'ordre, à partir d'un numéro (ro) de la valeur linguistique de la variable de départ et d'un numéro issu d'un premier registre (REG1), un maximum respectif et en reprenant le maximum respectif dans le premier registre si un facteur de pondération (g) pour la fonction d'appartenance de la valeur linguistique respective de la variable de départ est différent de zéro et si la partie conditionnelle de la règle respective est remplie (hit = 1), et en relevant après la dernière règle, à la sortie du premier registre (REG1), le numéro maximal (lwmax) de la valeur linguistique de la variable de départ, et
dans laquelle on détermine dans la première étape, le numéro minimal (lwmin) d'une valeur linguistique de la variable de départ en formant pour toutes les règles, à chaque fois dans l'ordre, à partir d'un numéro (ro) de la valeur linguistique de la variable de départ et d'un numéro issu d'un second registre (REG2), un minimum respectif et en reprenant le minimum respectif dans le second registre si le facteur de pondération (g) pour la fonction d'appartenance de la valeur linguistique respective de la variable de départ est différent de zéro et si la partie conditionnelle de la règle respective est remplie (hit = 1), et en relevant après la dernière règle, à la sortie du second registre (REG2), le numéro minimal (lwmin) d'une valeur linguistique de la variable de départ.

3. Méthode pour le traitement rapide d'inférence dans un processeur à logique floue,
dans laquelle on détermine dans une première étape, à partir des numéros (ro) des valeurs linguistiques de la variable de départ de toutes les règles, un numéro maximal (lwmax) pour une valeur linguistique de la variable de départ et un numéro minimal (lwmin) pour une valeur linguistique de la variable de départ,
dans laquelle on utilise dans une seconde étape, le numéro maximal (lwmax) pour l'adressage à l'intérieur d'un mot de mémoire stocké dans une mémoire, lequel mot de mémoire contient pour chaque valeur linguistique de la variable de départ respectivement un numéro de quadrant (qnr), et dans laquelle les numéros de quadrant forment les deux bits de plus fort poids d'une valeur maximale d'exploration (sb) dont les autres bits sont constitués de 1 logiques,
dans laquelle a lieu dans une troisième étape, à partir de la valeur maximale d'exploration (sb), une diminution de la valeur d'exploration (s), jusqu'à ce que la valeur de la fonction d'appartenance de la valeur linguistique de la variable de départ ayant le numéro minimal (lwmin) soit égale à zéro et la valeur d'exploration (s) prenne la valeur minimale d'exploration (smin), et
dans laquelle on détermine dans une quatrième étape, uniquement les valeurs de fonctions d'appartenance d'un ensemble (FA(s) ) constitué des valeurs linguistiques pondérées de la variable de départ, à l'intérieur d'un intervalle entre les valeurs minimale et maximale d'exploration (smin, sb), et on les transmet à un circuit de défuzzification pour traitement ultérieur.

4. Méthode selon la revendication 3,
dans laquelle on détermine dans la première étape, le numéro maximal (lwmax) pour une valeur linguistique de la variable de départ en formant pour toutes les règles, à chaque fois dans l'ordre, à partir d'un numéro (ro) de la valeur linguistique de la variable de départ et d'un numéro issu d'un registre (REG1), un maximum respectif et en reprenant le maximum respectif dans le premier registre si un facteur de pondération (g) pour la fonction d'appartenance de la valeur linguistique respective de la variable de départ est différent de zéro et si la partie conditionnelle de la règle respective est remplie (hit = 1), et en relevant après la dernière règle, à la sortie du premier registre (REG1), le numéro maximal (lwmax) de la valeur linguistique de la variable de départ, et
dans laquelle on détermine dans la première étape, le numéro minimal (lwmin) pour une valeur linguistique de la variable de départ en formant pour toutes les règles, à chaque fois dans l'ordre, à partir d'un numéro (ro) de la valeur linguistique de la variable de départ et d'un numéro issu d'un registre (REG2), un minimum respectif, et en reprenant le minimum respectif dans le second registre si le facteur de pondération (g) pour la fonction d'appartenance de la valeur linguistique respective de la variable de départ est différent de zéro et si la partie conditionnelle de la règle respective est remplie (hit = 1), et en relevant après la dernière règle, à la sortie du second registre (REG2), le numéro minimal (lwmin) d'une valeur linguistique de la variable de départ.

5. Méthode selon la revendication 3 ou 4,
dans laquelle une mémoire de fonctions d'appartenance des valeurs linguistiques de la variable de départ est organisée de manière à générer pour une valeur d'exploration (s) définie, parmi au maximum deux numéros possibles de valeurs linguistiques rencontrées de la variable de départ, toujours le numéro le plus petit possible d'une valeur linguistique rencontrée de la variable de départ,
dans laquelle a lieu dans la troisième étape, à partir de la valeur maximale d'exploration (sb), une diminution de la valeur d'exploration (s) tant que le numéro (no) de la valeur linguistique de la variable de départ est supérieur ou égal au numéro minimal (lwmin) d'une valeur linguistique de la variable de départ, et dans laquelle, après un passage à un numéro minimal immédiatement inférieur (lwmin -1) d'une valeur linguistique de la variable de départ, on poursuit l'exploration jusqu'à ce qu'une valeur (mo1) de la fonction d'appartenance de la valeur linguistique de la variable de départ, valeur associée au numéro incrémenté par un (no1) de la valeur linguistique de la variable de départ, soit égale à zéro, ou, après un nouveau passage à un numéro minimal encore inférieur (lwmin -2) d'une valeur linguistique de la variable de départ, le numéro incrémenté par un (no1) de la valeur linguistique de la variable de départ soit inférieur au numéro minimal (lwmin) d'une valeur linguistique de la variable de départ, la valeur minimale d'exploration (smin) étant obtenue à la fin de l'exploration.
